Europäisches Patentamt

European Patent Office

Office européen des brevets

(11) Numéro de publication: **0 522 967 B1**

## (12) FASCICULE DE BREVET EUROPEEN

(45) Date de publication du fascicule du brevet: **04.10.95**    (51) Int. Cl.⁶: **G01C  19/72**

(21) Numéro de dépôt: **92401995.3**

(22) Date de dépôt: **09.07.92**

---

(54) **Dispositif de mesure à fibre optique, gyromètre, centrale de navigation et de stabilisation.**

---

(30) Priorité: **11.07.91 FR 9108765**

(43) Date de publication de la demande:
**13.01.93 Bulletin  93/02**

(45) Mention de la délivrance du brevet:
**04.10.95 Bulletin  95/40**

(84) Etats contractants désignés:
**BE DE ES FR GB IT LU MC NL SE**

(56) Documents cités:
**EP-A- 0 346 213**
**EP-A- 0 430 747**

(73) Titulaire: **PHOTONETICS**
**52 Avenue de l'Europe**
**F-78160 Marly le Roi (FR)**

(72) Inventeur: **Lefevre, Hervé**
**19, rue des Cordelières**
**F-75013 Paris (FR)**
Inventeur: **Martin, Philippe**
**5 Clos Blaise Cendrars**
**F-78760 Ponchartrain (FR)**

(74) Mandataire: **Michelet, Alain et al**
**Cabinet Harlé et Phelip**
**21 rue de la Rochefoucauld**
**F-75009 Paris (FR)**

Rank Xerox (UK) Business Services
(3.10/3.09/3.3.3)

## Description

L'invention concerne un dispositif de mesure à fibre optique permettant de mesurer la variation d'un paramètre qui produit des perturbations non réciproques dans un interféromètre en anneau de SAGNAC.

L'interféromètre de SAGNAC et les phénomènes physiques qu'il met en jeu sont bien connus. Dans un tel interféromètre, une lame séparatrice ou autre dispositif séparateur divise une onde incidente. Les deux ondes contra-propagatives ainsi créées se propagent en sens opposés le long d'un chemin optique fermé, se recombinent et produisent des interférences qui dépendent de la différence de phase entre les ondes lors de leur recombinaison.

A l'origine, le chemin optique fermé des interféromètres de SAGNAC était défini par des miroirs. Il est maintenant connu qu'il peut être constitué par une bobine multi-tour de fibre optique monomode.

Il est également connu que certains phénomènes physiques sont susceptibles de produire des perturbations, particulièrement des déphasages non-réciproques, sur les ondes contra-propagatives engendrant des différences de phase relative entre ces ondes qui modifient leur état d'interférence lors de leur recombinaison.

La mesure de la différence de phase relative permet de quantifier le phénomène qui l'a engendré.

Le principal phénomène physique susceptible de créer ces perturbations non réciproques est l'effet SAGNAC produit par la rotation de l'interféromètre par rapport à un axe perpendiculaire au plan de son chemin optique fermé. L'effet FARADAY ou effet magnéto-optique colinéaire est également connu comme produisant des effets non réciproques de ce type. D'autres effets peuvent dans certaines conditions produire également une différence de phase non réciproque.

Au contraire, les variations de nombreux paramètres représentatifs de l'environnement qui sont souvent à l'origine de perturbations des mesures n'ont que des effets réciproques sur l'interféromètre de SAGNAC, ne perturbent pas la différence de phase relative entre les ondes contra-propagatives et n'ont donc pas d'influence sur la mesure du paramètre étudié. Tel est le cas des variations lentes de température, d'indices, etc... qui modifient le chemin optique parcouru par les ondes, mais le modifient de manière réciproque.

De nombreux travaux ont été menés afin d'améliorer la sensibilité et la précision des mesures pouvant être réalisées avec un tel appareil de mesure. On pourra par exemple consulter sur ce sujet le Chapitre 9 intitulé "Fiber Optic Gyroscope" de Hervé C. LEFEVRE dans l'ouvrage "OPTICAL FIBER SENSORS" Vol. 2 -ARTECH HOUSE- 1989 et l'article intitulé " Principe du gyrofibre, le gyromètre, des applications à haute dynamique publié dans la Revue Scientifique de la Défense ( 1$^{er}$ trimestre 1990 ), du même auteur.

Différents modes de traitement des signaux ont été proposés. Il a tout d'abord été constaté que la réponse fournie par l'interféromètre de SAGNAC est de la forme $P = Po(1 + \cos \delta\phi)$ et donc que la sensibilité de ce signal au voisinage de la différence de phase $\delta\phi = 0$ est faible. Il a été proposé d'introduire une modulation de différence de phase $\delta\phi_m$, carrée d'amplitude de plus ou moins $\pi/2$ par exemple qui déplace le point de fonctionnement et produit un signal périodique dont l'amplitude est une fonction sinusoïdale du paramètre mesuré et que l'on peut donc exploiter avec une plus grande sensibilité et stabilité. Cette différence de phase est dite différence de phase de mise au biais $\delta\phi_m$.

Cette différence de phase $\delta\phi_m$ est produite par un modulateur de phase, placé à l'une des extrémités de la bobine multi-tour de l'interféromètre et commandé par un signal $V_m$. Ce signal $V_m$ génère sur chacune des ondes un déphasage $\phi_m$ qui produit une différence de phase entre les ondes contra-propagatives:

$$\delta\phi_m(t) = \phi_m(t) - \phi_m(t - \tau)$$

où, t est le temps et $\tau$ le temps de transit, de l'une des ondes dans la bobine

Il a ensuite été montré que la précision de la mesure est améliorée par l'utilisation d'une méthode de zéro également appelée fonctionnement en boucle fermée. Selon cette méthode, une différence de phase supplémentaire dite de contre-réaction $\delta\phi_{cr}$ est appliquée et sert à compenser la différence de phase $\delta\phi_p$ produite par le paramètre mesuré. La somme de ces deux différences de phase $\delta\phi_{cr}$ et $\delta\phi_p$, est maintenue nulle, ce qui permet de faire fonctionner l'interféromètre avec la sensibilité maximale. La mesure est réalisée par l'exploitation du signal nécessaire à la production de la différence de phase de contre-réaction $\delta\phi_{cr}$. Ainsi, la mesure est stable et linéaire.

Cette différence de phase $\delta\phi_{cr}$ est produite par le modulateur de phase commandé par un signal $V_{cr}$. Ce signal $V_{cr}$ génère sur chacune des ondes un déphasage $\phi_{cr}$ qui produit une différence de phase $\delta\phi_{cr}$ entre les ondes contra-propagatives:

$$\delta\phi_{cr}(t) = \phi_{cr}(t) - \phi_{cr}(t - \tau)$$

L'asservissement nécessaire à ce fonctionnement en boucle fermée peut être réalisé par un décalage de fréquence. Ce décalage peut être généré directement à partir de modulateurs acousto-optiques ou bien simulé en appliquant une modulation serrodyne sur un modulateur de phase. Une telle modulation serrodyne est effectuée en appliquant une rampe de modulation de phase en dent de scie.

Dans un tel dispositif les perturbations susceptibles d'être engendrées par une instabilité spectrale de la source ont été soulignées et une solution à ce problème a été proposé dans le brevet français FR-A-2 613 067 (EP-A-430 747). Selon la technique décrite dans ce document une modulation de la différence de phase carrée, permettant de déplacer le point de fonctionnement du dispositif est constituée de créneaux asymétriques c'est-à-dire ayant, pendant des durées différentes, alternativement leur amplitude maximum puis une amplitude nulle.

Il est montré, qu'en raison de la dispersion du milieu constituant la fibre de l'interféromètre il est ainsi possible, d'extraire du dispositif deux signaux l'un fonction du paramètre mesuré, l'autre fonction de la longueur d'onde moyenne de la source. A cet effet le flux lumineux est divisé spectralement, en deux, par un filtre. Lorsque les deux flux, sont produits par un filtre stable l'exploitation des deux signaux fonction de leur longueur d'onde moyenne respective permet d'asservir, c'est-à-dire de stabiliser, la source.

Par ailleurs, dans le brevet français FR-A-2 654 827 il a été proposé un traitement du signal assurant le fonctionnement de l'interféromètre en boucle fermée. Selon cette technique la différence de phase de mise au biais $\delta\phi_m$ est modulée sur quatre valeurs successives $\phi_0$, $a\phi_0$, $-\phi_0$, $-a\phi_0$. Cette modulation particulière de la différence de phase permet, en même temps d'asservir le gain de la chaîne de commande de la modulation et présente différents avantages spécifiques.

Jusqu'à présent seuls des moyens très lourds ont été envisagés pour s'affranchir, dans un dispositif comportant une modulation de la différence de phase, de l'incertitude de mesure engendrée par les variations spectrales de la source. On a par exemple envisagé d'utiliser un interféromètre de référence, ou encore, l'introduction d'un spectromètre à réseau miniaturisé.

Le but de l'invention est de proposer un dispositif compatible avec les différentes techniques de modulation de phase et permettant un contrôle du spectre de la source.

C'est un autre objectif de l'invention de proposer une technique de contrôle du spectre de la source qui soit indépendante des phénomènes de dispersion et puisse donc être utilisée à toutes les longueurs d'onde y-compris à la longueur d'onde $1,3\mu m$ pour laquelle la dispersion des fibres de silice est nulle.

A cet effet l'invention concerne un dispositif de mesure à fibre optique dans lequel la variation d'un paramètre mesuré engendre une différence de phase entre deux ondes.

Il comporte une source lumineuse ayant un spectre dont la longueur d'onde moyenne est $\lambda_m$, un interféromètre en anneau de SAGNAC de préférence monomode dans lequel se propage deux ondes contra-propagatives, le temps de propagation des ondes entre leur séparation et leur recombinaison à la longueur d'onde $\lambda_m$ étant $\tau$.

Un premier détecteur reçoit un flux lumineux sortant de l'interféromètre et le convertit en un signal électrique représentant la différence de phase totale $\delta\phi_t$ entre les ondes contra-propagatives. Un modulateur de phase agit sur la différence de phase existante entre les deux ondes conta-propagatives en générant une différence de phase $\delta\phi_m + \delta\phi_{cr}$, comportant une composante de mise au biais $\delta\phi_m$ et une composante $\delta\phi_{cr}$ de contre-réaction. Des premiers moyens électroniques recevant un signal électrique du premier détecteur, fournissent un signal fonction du paramètre mesuré, ce signal, fonction du paramètre mesuré produit la composante $\phi_{cr}$ de commande du modulateur de phase déterminée de telle sorte que la différence de phase $\delta\phi_{cr}$ qu'elle produit entre les ondes contra-propagatives compense la différence de phase $\delta\phi_p$ créée par le paramètre mesuré.

Le dispositif de l'invention comporte de plus, un filtre spectral étroit et stable placé entre l'interféromètre et le premier détecteur et séparant le flux incident en un flux principal à spectre large, adressé sur le premier détecteur et un flux filtré.

Les premiers moyens électroniques comportent des moyens de mesure et d'asservissement du gain de la chaîne de modulation de phase à partir d'une opération réalisée par des premiers moyens de traitement électroniques sur le signal provenant du premier détecteur.

Il comporte un deuxième détecteur, recevant le flux filtré, la réponse du deuxième détecteur étant traitée par des deuxièmes moyens électroniques comportant des moyens réalisant, sur le signal provenant du deuxième détecteur, une mesure du gain, identique à celle réalisée par les premiers moyens de mesure sur le signal provenant du premier détecteur, et fournissant un signal fonction de l'écart entre la longueur d'onde moyenne $\lambda_{mf}$ du flux filtré et la longueur d'onde moyenne $\lambda_{mp}$ du flux principal.

Dans un mode de réalisation préféré, le signal fonction du spectre de la source lumineuse fourni par les deuxièmes moyens de traitement électronique commande ladite source lumineuse de manière à asservir la longueur d'onde moyenne $\lambda_{mp}$ du flux principal sur la longueur d'onde moyenne $\lambda_{mf}$ du flux filtré.

De préférence les premiers moyens électroniques comportent chacun un convertisseur analogique - numérique numérisant le signal électrique reçu respectivement du premier détecteur et du deuxième détecteur, le signal de commande de modulation $v_m$ est déterminé de telle sorte que la différence de phase $\delta\phi_m$ qu'il produit entre les ondes contra-propagatives prenne périodiquement un nombre de valeurs multiple de quatre, reliées quatre à quatre par les relations :

$$\delta\phi_1 = \phi_o \qquad \delta\phi_2 = a\phi_o$$
$$\delta\phi_3 = -\phi_o \qquad \delta\phi_4 = -a\phi_o$$

où a est une constante positive fixée et $\phi_o$ est une différence de phase de référence dépendante de a, et, les premiers moyens électroniques produisent un signal fonction du paramètre mesuré en exploitant les quatre valeurs $x_{1p}$, $x_{2p}$, $x_{3p}$, $x_{4p}$ fournies par le premier détecteur en réponse à quatre valeurs du signal de commande $\phi_m$ selon la formule:

$$(x_{1p} + x_{4p}) - (x_{2p} + x_{3p}).$$

Dans un premier mode de réalisation, le signal de commande $v_m$ est déterminé de telle sorte que la différence de phase $\delta\phi_m$ prenne périodiquement quatre valeurs.

Il est particulièrement intéressant que les moyens électroniques maintiennent constant le gain de la chaîne de commande de la modulation en produisant un signal fonction dudit gain en exploitant les quatre valeurs $x_{1p}$, $x_{2p}$, $x_{3p}$, $x_{4p}$ fournies en réponse à quatre valeurs du signal de commande $v_m$ selon la formule $(x_{1p} + x_{3p}) - (x_{2p} + x_{4p})$, ledit signal agissant sur la chaîne de modulation de façon à maintenir le gain constant, en satisfaisant la condition: $\cos\phi_o = \cos a\phi_o$.et que les deuxièmes moyens électroniques (27) produisent un signal fonction de l'écart entre la longueur d'onde moyenne $\lambda_{mf}$ du flux filtré et la longueur d'onde moyenne $\lambda_{mp}$ du flux principal en exploitant les quatre valeurs $x_{1f}$, $x_{2f}$, $x_{3f}$, $x_{4f}$ fournies en réponse à quatre valeurs du signal de commande $\phi_m$ selon la formule $(x_{1f} + x_{3f}) - (x_{2f} + x_{4f})$.

Dans un deuxiéme mode de réalisation,le signal de commande $v_m$ est déterminé de telle sorte que la différence de phase $\delta\phi_m$ prenne périodiquement huit valeurs :

$$\delta\phi_1 = (\phi_0 + d\phi_0) \qquad \delta\phi'_1 = (\phi_0 - d\phi_0)$$
$$\delta\phi_2 = -(\phi_0 + d\phi_0) \qquad \delta\phi'_2 = -(\phi_0 - d\phi_0)$$
$$\delta\phi_3 = a(\phi_0 + d\phi_0) \qquad \delta\phi'_3 = a(\phi_0 - d\phi_0)$$
$$\delta\phi_4 = -a(\phi_0 + d\phi_0) \qquad \delta\phi'_4 = -a(\phi_0 - d\phi_0)$$

Ces valeurs de la différence de phase produisant en réponse, pour le flux principal, des valeurs $x_{1p}$, $x'_{1p}$, $x_{2p}$, $x'_{2p}$, $x_{3p}$, $x'_{3p}$, $x_{4p}$, $x'_{4p}$, d'une part et pour le flux secondaire, des valeurs $x_{1f}$, $x'_{1f}$, $x_{2f}$,

$x'_{2f}$, $x_{3f}$, $x'_{3f}$, $x_{4f}$, $x'_{4f}$, d'autre part ,la première unité de traitement regroupant deux à deux les valeurs $x_{1p}$ à $x'_{4p}$ selon la loi

$$X_{1p} = (x_{1p} + x'_{1p})/2 , \quad X_{2p} = (x_{2p} + x'_{2p})/2,$$
$$X_{3p} = (x_{3p} + x'_{3p})/2 , \quad X_{4p} = (x_{4p} + x'_{4p})/2$$

réalise l'opération: $(X_{1p} + X_{3p}) - (X_{2p} + X_{4p})$ et utilise le signal ainsi produit pour asservir le gain de la chaîne de modulation

et que la deuxième unité de traitement du signal sortant du deuxième détecteur sélectionne les états $x_{1f}$, $x_{2f}$, $x_{3f}$, $x_{4f}$ réalise l'opération:$( x_{1f} + x_{3f}) - (x_{2f} + x_{4f})$ et utilise le signal ainsi produit pour contrôler la valeur de $d\phi_0$ et générer une mesure de l'écart entre la longueur d'onde moyenne $\lambda_{mf}$ du flux filtré et la longueur d'onde moyenne $\lambda_{mp}$ du flux principal..

Avantageusement a est alors choisie égale à 3 ou encore à 2.

Le filtre spectral est, de préférence un filtre de Fabry - Perot stable, la longueur d'onde moyenne $\lambda_m$ du spectre de la source est 1,3$\mu$m.

De préférence, la source lumineuse comporte deux sources élémentaires associées, de telle sorte que la variation de l'intensité relative des sources élémentaires permette de faire varier sa longueur d'onde moyenne.

L'invention concerne également un gyromètre conforme au dispositif de mesure présenté plus haut, le paramètre mesuré étant la vitesse de rotation de l'interféromètre.

Elle concerne encore un centrale de navigation ou de stabilisation inertielle comportant au moins un tel gyromètre.

L'invention sera décrite plus en détail en référence aux dessins dans lesquels.

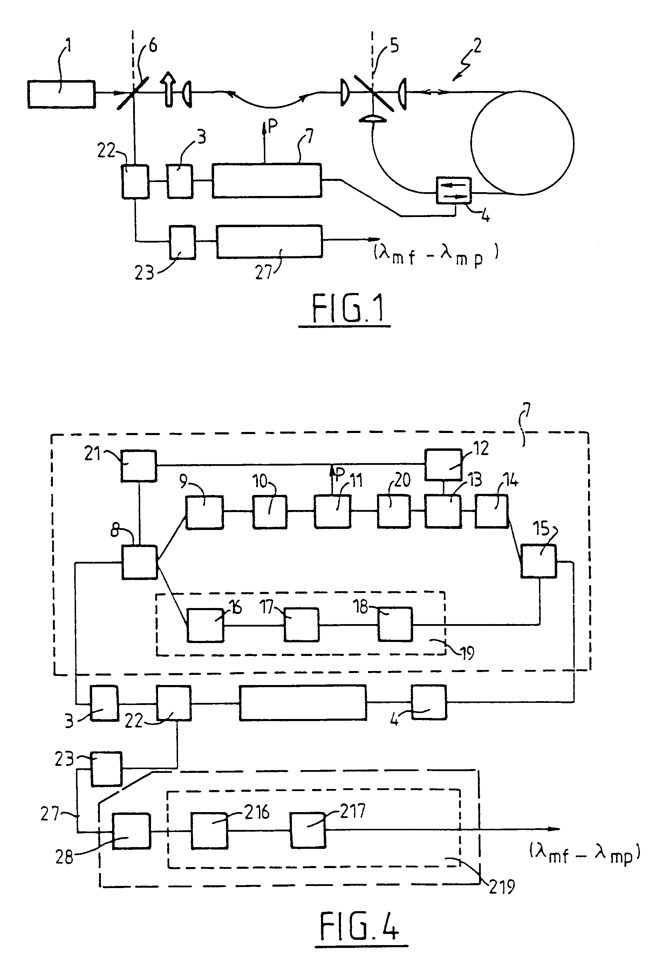

- La figure 1 est une représentation générale du dispositif de mesure de l'invention.
- Les figures 2 et 3 représentent chacune une décomposition du flux incident permettant d'obtenir le flux principal d'une part et le flux filtré d'autre part.
- La figure 4 represente un organigramme du traitement du signal dans un premier mode de réalisation.
- La figure 5 représente un organigramme du traitement du signal dans un deuxième mode de réalisation.
- La figure 6 représente pour une longueur d'onde moyenne $\lambda_m$ du spectre de la source le déphasage appliqué par le modulateur, la différence de phase dans l'interféromètre et le signal correspondant produit par le détecteur quand la différence de phase générée par le paramètre mesuré est nulle et avec un gain de la chaîne de modulation asservi.

- La figure 7 représente pour une longueur d'onde moyenne $\lambda_m$ du spectre de la source la différence de phase dans l'interféromètre et le signal correspondant produit par le détecteur lors d'une variation du paramètre mesuré, avec un gain de la chaîne de modulation asservi.

- La figure 8 représente pour une longueur d'onde moyenne $\lambda_m$ du spectre de la source la différence de phase dans l'interféromètre et le signal produit par le détecteur lors d'une variation du gain de la chaîne de commande de la modulation, quand la différence de phase générée par le paramètre mesuré est nulle.

- La figure 9 représente, pour deux longueurs d'ondes moyennes $\lambda_{mp}$ et $\lambda_{mf}$, la différence de chemin optique dans l'interféromètre et les signaux correspondants produits par chacun des détecteurs quand la différence de phase générée par le paramètre mesuré est nulle et que le gain de la chaîne de modulation est asservi pour la longueur d'onde $\lambda_{mp}$, avec un premier type de modulation.

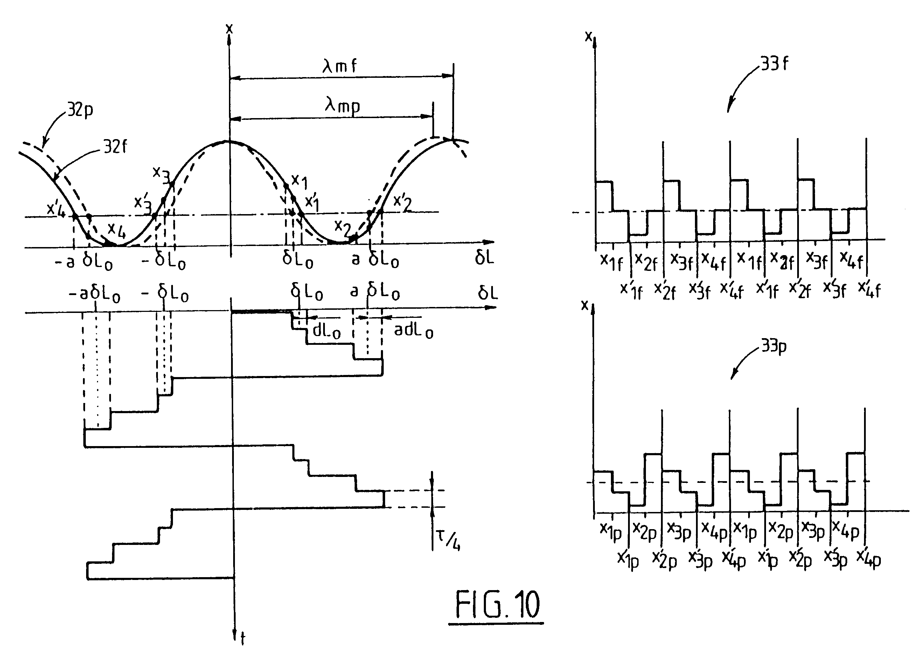

- La figure 10 représente, pour deux longueurs d'ondes moyennes $\lambda_{mp}$ et $\lambda_{mf}$, la différence de chemin optique dans l'interféromètre et les signaux correspondants produits par chacun des détecteurs quand la différence de phase générée par le paramètre mesuré est nulle, et que le gain de la chaîne de modulation est asservi pour la longueur d'onde $\lambda_{mp}$, avec un deuxième type de modulation.

- Les figures 11A, 11B, 11C représentent le spectre global d'une source composée de deux sources élémentaires.

Le dispositif de mesure a fibre optique de l'invention comporte une source lumineuse 1, à spectre étendu qui est le plus souvent une diode super luminescente ou une source fibre, dopée terre rare, un interféromètre en anneau de SAGNAC à fibre optique monomode globalement désigné par la référence 2.

Cet interféromètre en anneau 2 comporte un séparateur 5 assurant la séparation des ondes a l'entrée de l'interféromètre puis leur recombinaison a la sortie, un chemin optique fermé constitué par une fibre optique monomode enroulée sur elle-même.

On appelle ici, source à spectre large ou étendu une source dont la largeur de spectre, à mi-hauteur est de l'ordre de 30 nm, par exemple comprise entre 5 et 50 nm pour une longueur d'onde moyenne de 850 nm.

Des sources de longueur d'onde moyenne égale à 1050 nm, 1300 nm, ou 1550 nm permettent également d'obtenir de bons résultats.

Le dispositif de mesure comporte également un premier détecteur 3 fournissant un signal fonction de l'état d'interférence des ondes à la sortie de l'interféromètre lui-même.

Le signal optique est fourni au premier détecteur 3 par l'intermédiaire d'un séparateur 6.

A une extrémité du chemin optique de l'interféromètre est interposé un modulateur 4 qui, commandé à partir d'un signal électrique, est susceptible d'introduire une différence de phase entre les deux ondes. Le fonctionnement de l'interféromètre est amélioré en interposant entre la source lumineuse 1 et l'entrée de l'anneau, c'est-à-dire entre les separateurs 5 et 6, un polariseur et un filtre spatial. De manière connue ce filtre spatial est constitué par une fibre optique monomode.

Des moyens électroniques 7 commandent en contre réaction le modulateur de phase 4 en fonction du signal reçu du premier détecteur 3. Ces moyens électroniques 7 sont configurés de telle sorte que la variation du signal d'erreur démodulé en fonction de la différence de phase produit entre les deux ondes au voisinage du zéro soit approximativement linéaire. Cette disposition permet d'obtenir une très bonne sensibilité de la variation du signal d'erreur démodulé au voisinage du zéro de la différence de phase alors qu'il est aisément compréhensible que lorsque la dépendance du signal par rapport à la différence de phase est de forme cosinoïdale la sensibilité au voisinage du zéro de la différence de phase est très faible

De plus ces moyens électroniques 7 ont pour fonction d'asservir le gain de la chaîne de commande du modulateur 4.

D'autre part ces moyens électroniques 7 ont pour fonction de maintenir la différence de phase nulle c'est-à-dire que lorsque la variation du paramètre mesuré introduit une différence de phase entre les deux ondes dans l'interféromètre, cette différence de phase produit une variation du signal émis par le premier détecteur 3 entraînant par l'intermédiaire des moyens électroniques 7 et ou modulateur 4 une action égale et de sens inverse à la différence de phase initialement produite de telle sorte que la différence de phase globale est ramenée à la valeur nulle. La première boucle asservissant le gain de la chaîne de commande de modulation, la mesure de la différence de phase de contre réaction est alors très précise.

Enfin ces moyens électroniques 7 fournissent par exploitation du signal de commande du modulateur de phase un signal fonction de la variation du paramètre mesuré.

La différence de phase totale $\delta\phi_t$ entre les ondes contra-propagatives, est la somme de la différence de phase $\delta\phi_p$ introduite par l'effet du paramètre mesuré, et de la différence de phase $\delta\phi_m + \delta\phi_{cr}$ introduite par le modulateur de phase

4. $\delta\phi_m$ est la modulation de phase de mise au biais, $\delta\phi_{cr}$ est la différence de phase de contre-réaction qui compense $\delta\phi_p$ a l'équilibre.

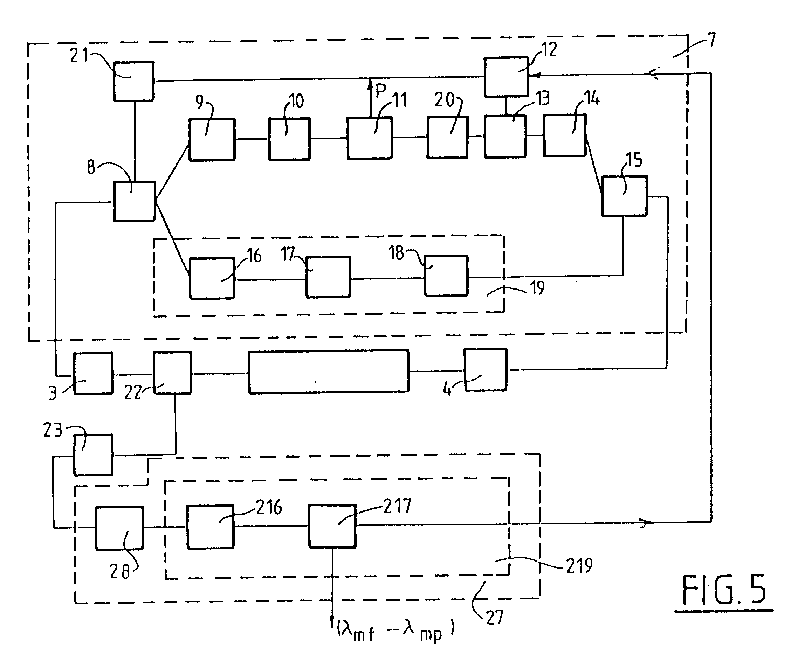

Différents modes de réalisation des moyens électroniques 7 sont possibles et ont été décrits, par exemple dans les documents antérieurs cités plus haut. Ils comportent avantageusement ( figures 4 et 5 ) un convertisseur analogique-numérique 8 recevant le signal fourni par le récepteur 3. Un système à traitement numérique 9 produit un signal fonction du paramètre mesuré, un filtre 10 filtre ce signal et alimente un registre 11 dans lequel la valeur du paramètre mesuré est stockée.

Un accumulateur 20, alimenté par le registre 11 génére un signal de contre-réaction fonction du paramètre mesuré, qui alimente la première entrée d'un additionneur 13. La deuxième entrée de l'additionneur 13 est alimentée par un générateur de modulation 12. L'ensemble des composants numérique est synchronisé par une horloge 21.

Un convertisseur numérique-analogique 14 recevant le signal de sortie de l'additionneur 13 alimente un amplificateur 15 qui commande le modulateur de phase 4

L'asservissement et la mesure du gain de la chaîne de commande de la modulation sont réalisés par les moyens électroniques 19. Ces moyens comportent un système de traitement 16 alimenté par le signal émis par le convertiseur analogique-numérique 8, un filtre intégrateur 17 et un convertisseur numérique-analogique 18, dont le signal de sortie commande le gain de l'amplificateur 15 ou la tension de référence du convertisseur numérique-analogique 14.

Dans un mode de réalisation préféré, le générateur de modulation 12 produit un signal de modulation tel que la différence de phase $\delta\phi_m$ prenne successivement les valeurs $\delta\phi_1$, $\delta\phi_2$, $\delta\phi_3$, et $\delta\phi_4$., reliées par les relations:

$$\delta\phi_1 = \phi_o \qquad \delta\phi_2 = a\phi_o$$
$$\delta\phi_3 = -\phi_o \qquad \delta\phi_4 = -a\phi_o$$

où a est une constante positive fixée et $\phi_o$ est une différence de phase de référence dépendante de a, satisfaisant,de préférence la condition:

$$\cos\phi_o = \cos a\phi_o,$$

La réponse à ce signal de modulation, reçue par le premier détecteur 3 et numérisée par le convertisseur 8 prend périodiquement quatre valeurs $x_{1p}$, $x_{2p}$, $x_{3p}$, $x_{4p}$ correspondant respectivement au niveau de modulation $\delta\phi_1$, $\delta\phi_2$, $\delta\phi_3$ et $\delta\phi_4$.

L'opération $(x_{1p} + x_{3p}) - (x_{2p} + x_{4p})$ est réalisée par le système de traitement numérique 16. Elle fournit un signal $x_g$ qui est indépendant de la différence de phase $\delta\phi_p$ due au paramètre mesuré, mais par contre est significatif du gain de la chaîne de commande de modulation. En particulier, $x_g = 0$ quand la condition $\cos\phi_o = \cos a\phi_o$ est respectée. Ce signal $x_g$ peut donc servir de signal d'erreur pour une boucle d'asservissement du gain de la chaîne de commande de modulation.

Les moyens électroniques 9 effectuent l'opération $(x_{1p} + x_{4p}) - (x_{2p} + x_{3p})$ pour produire un signal $x_p$ dépendant de la différence de phase non réciproque $\delta\phi_p$ à mesurer dans l'interféromètre. Le signal $x_p$ sert de signal d'erreur pour asservir la différence de phase totale de l'interféromètre à zéro en compensant la différence de phase non réciproque $\delta\phi_p$ avec une différence de phase opposée $\delta\phi_{cr}$. Cette différence de phase $\delta\phi_{cr}$ étant générée à travers la même chaîne de commande que la modulation $\delta\phi_m$, l'asservissement du gain de cette chaîne avec le signal $x_g$ permet d'avoir une mesure stable et contrôlée de $\delta\phi_{cr}$ et donc finalement de $\delta\phi_p$ qui lui est opposée et qui est le paramètre que l'on cherche à mesurer.

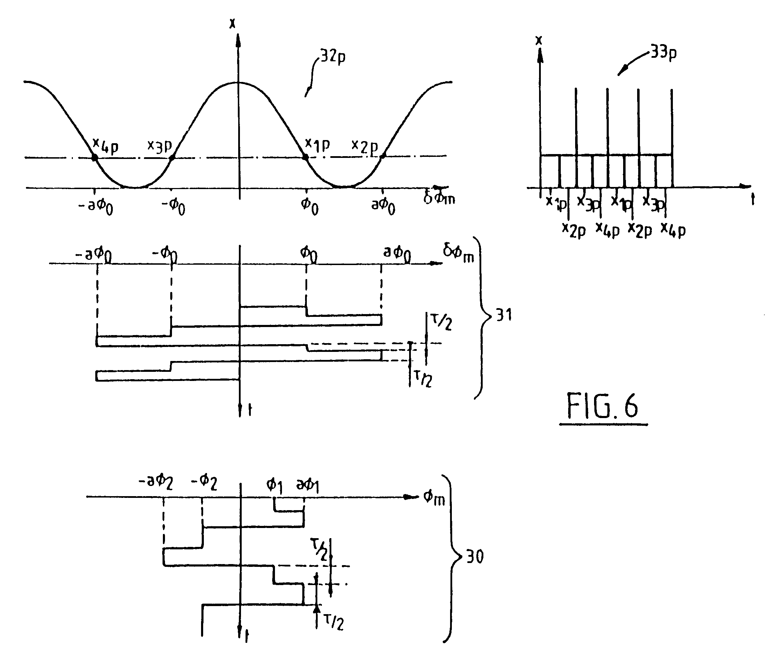

- Les figures 6 à 8 représentent dans des conditions variées, lorsque le spectre de la source est asservi,.le déphasage $\phi_m$ de modulation 30, la différence de phase $\delta\phi_m$ 31, la réponse de l'interféromètre 32, le signal 33 fourni par le premier détecteur en réponse à la différence de phase $\delta\phi_m$ 31.

Le signal de modulation $v_m$ de la différence de phase a une période égale a $2\tau$ ou $\tau$ est le temps de transit d'une onde à la longueur d'onde moyenne $\lambda_m$ dans la bobine; il produit une modulation $\phi_m$ du déphasage sur chacune des ondes.

Chaque période de la modulation $\phi_m$ est composée d'une impulsion de durée $\tau/2$ et d'amplitude $\phi_1$ et d'impulsions successives de même durée et d'amplitude respective $a\phi_1$, $-\phi_2$ et $-a\phi_2$, telles que $\phi_1 + \phi_2 = \phi_0$

De préférence a est choisie égale à 2 ou à 3.

La situation représentée sur la figure 6 est celle dans laquelle le paramètre mesuré est nul et le gain de la chaîne de mesure asservi. Le signal 33 fourni par le premier détecteur 3 présente des valeurs $x_{1p}$, $x_{2p}$, $x_{3p}$, $x_{4p}$ égales.

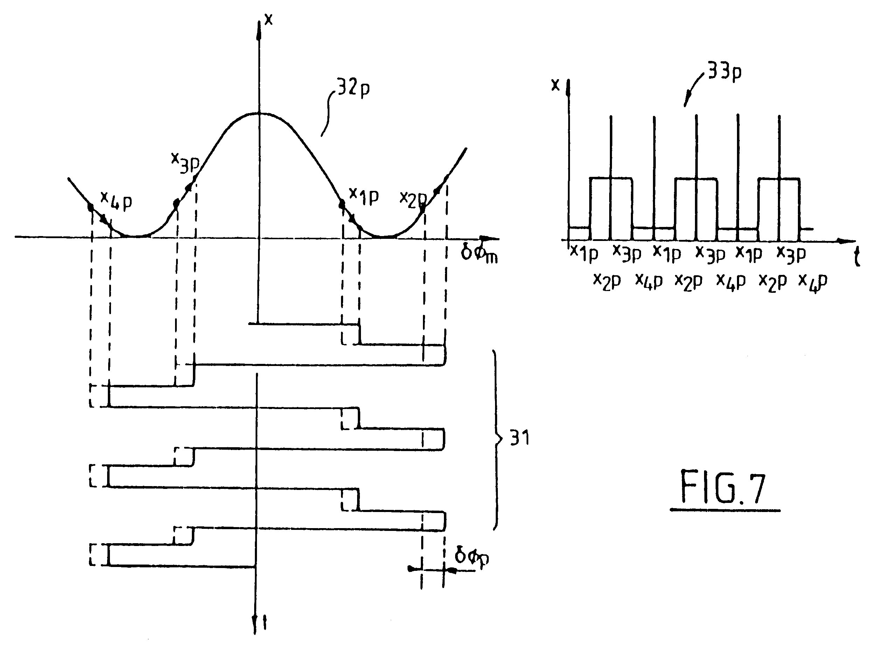

Une variation du paramètre mesuré, representée sur la figure 7 engendre une translation $\delta\phi_p$ de la modulation de la différence de phase $\delta\phi_m$ représentée en 31 qui produit un déséquilibre entre les signaux: $x_{1p} = x_{4p} \neq x_{2p} = x_{3p}$

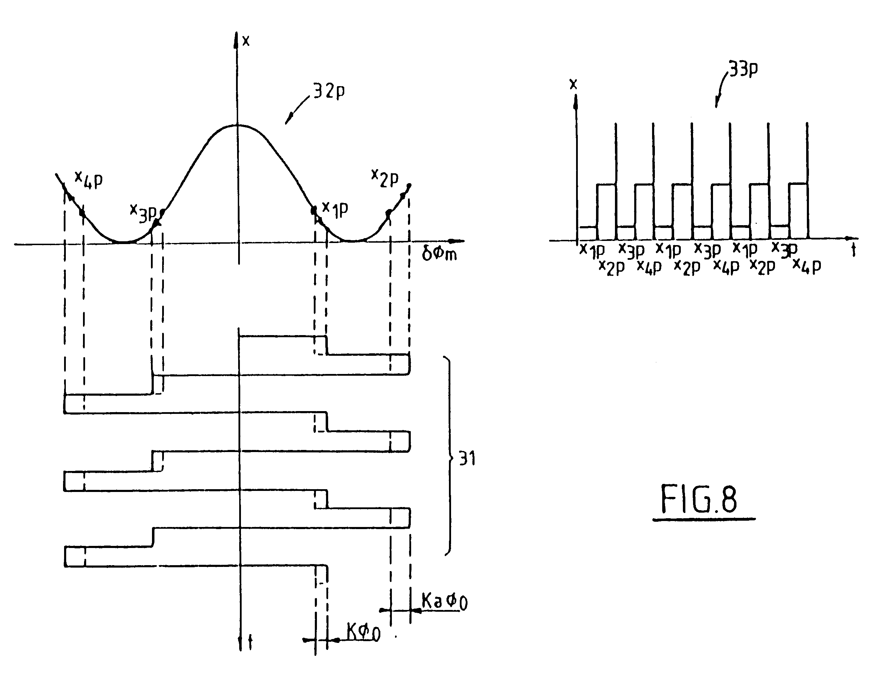

Sur la figure 8 est représentée la réaction du système lors d'une variation du gain de la chaîne de modulation. La variation homothétique $(1 + K)$ de ta différence de phase $\delta\phi_m$ représentée en 31 qui produit un déséquilibre entre les signaux: $x_{1p} = x_{3p} \neq x_{2p} = x_{4p}$

Le dispositif de l'invention comporte un filtre spectral stable 22 placé à la sortie de l'interféromètre 2. Ce filtre est disposé de telle sorte qu'il prélève sur le signal optique de retour de l'interféromètre une partie du spectre dit spectre filtré dont la longueur d'onde moyenne est représentée par $\lambda_{mf}$.

Différents moyens peuvent être mis en oeuvre pour obtenir, à partir du flux incident 133, le flux principal $133_p$, d'une part et le flux filtré $133_f$, d'autre part.

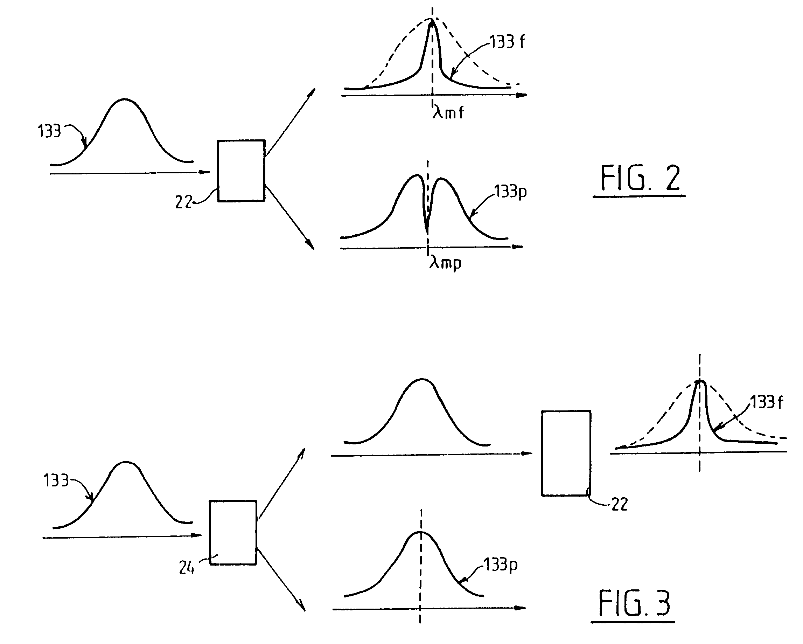

Le filtre 22 peut recevoir directement le flux incident 133 ( figure 2 ), il produit alors le flux principal $133_p$ par exemple par réflexion et le flux filtré $133_f$, complémentaire, par transmission.

Il est également possible de placer, sur le chemin du flux incident 133 , un séparateur 24 qui prélève une partie du flux incident sans selection spectrale. Le flux restant constitue le flux principal $133_p$ et le flux prélevé est adressé sur un filtre 22 qui produit le flux filtré $133_f$ ( figure 3 ).

Les deux voies ainsi constituées servent, l'une à effectuer la mesure du paramètre et à asservir te gain de ta chaîne de modulation, l'autre à fournir une mesure du spectre de ta source. Dans la description détaillée faite ici on a supposé que le flux principal assure la mesure du paramètre et l'asservissement du gain de la chaîne de modulation et que le flux filtré fournit la mesure spectrale. Le rôle respectif des flux peut être inversé.

Le complément du spectre filtré est dit spectre principal, sa longueur d'onde moyenne est $\lambda_{mp}$. Le spectre principal est adressé sur le premier détecteur 3 dont ta réponse est traitée par les premiers moyens électroniques 8 à 21 décrits plus haut pour produire la valeur du paramètre mesuré, compenser la différence de phase due au paramètre mesuré et asservir le gain de la chaine de modulation.

La sélection spectrale réalisée par le filtre étant étroite l'énergie contenue dans le spectre principal, ainsi d'ailleurs que sa longueur d'onde moyenne $\lambda_{mp}$ diffère très peu de l'énergie et de la longueur d'onde moyenne de l'ensemble du spectre. Ils peuvent y être assimilés.

Ainsi, l'essentiel de l'énergie disponible est contenue dans le spectre principal dont le signal peut être traité avec un rapport signal à bruit satisfaisant, analogue à celui obtenu en l'absence de prélèvement du spectre filtré.

Le spectre filtré, prélevé sur le faisceau d'entrée est adressé sur un deuxième détecteur 23 dont la réponse est traitée électroniquement par l'unité de traitement 27.

Cette unité de traitement 27, représentée sur les figures 4 et 5 comporte un convertisseur analogique-numérique 28, alimenté par le signal produit par le deuxième détecteur 23,et des deuxièmes moyens électroniques regroupés sous la référence 219. Ces deuxièmes moyens électroniques 219 comprennent un deuxième système de traitement 216 et, un registre d'écart de longueur d'onde 217.

Le système de traitement 216 effectue sur le signal provenant du deuxième détecteur 23 le même traitement que celui effectué par l'unité de traitement 16 sur le signal provenant du premier détecteur 3.

Lorsque les longueurs d'onde moyennes $\lambda_{mp}$ et $\lambda_{mf}$ respectivement du flux principal et du flux filtré sont les mêmes, les courbes 33 de réponse de l'interféromètre pour chacun de ces flux sont une seule et même courbe, les signaux produits par les premiers moyens 19, concernant le flux principal et ceux fournis par les deuxièmes moyens 219 concernant le flux filtré sont les mêmes.

Au contraire, lorsque le spectre de la source 1, c'est à dire également, nous l'avons vu, le spectre principal est décalé par rapport à la réponse du filtre, c'est à dire, par rapport au spectre du flux filtré, les courbes de réponse $32_p$ et $32_f$ diffèrent l'une de l'autre et le signal produit par le système 216 diffère de zéro. Ce signal est représentatif du décalage en longueur d'onde entre la longueur d'onde moyenne de la source et longueur d'onde centrale de la réponse du filtre.

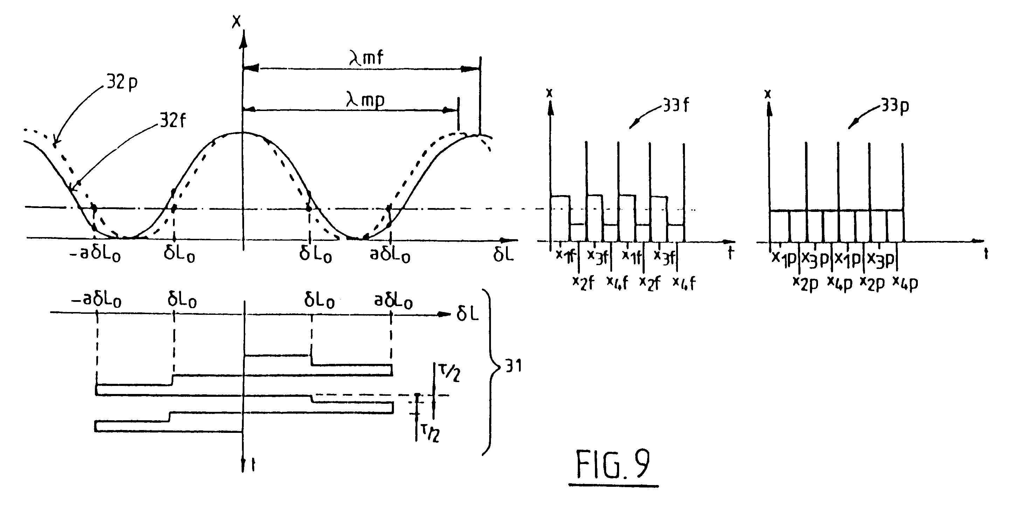

La figure 9 correspond a un déplacement du spectre de la source par rapport au filtre. Dans ce cas la valeur moyenne du spectre de la source ne coïncide plus avec la bande spectrale du filtre, il en résulte que les longueurs d'onde moyennes $\lambda_{mf}$ du spectre filtré et $\lambda_{mp}$ du spectre principal sont différentes. Les réponses $32_p$ et $32_f$ de l'interféromètre à ces deux longueurs d'onde sont donc différentes, se déduisant l'une de l'autre par homothétie de la même manière que se déduisent l'une de l'autre des réponses obtenues, à une longueur d'onde donnée, pour deux valeurs différentes du gain de la chaîne de modulation.

Chacune des voies optiques, respectivement filtrée et principale fournit, un signal $33_p$, $33_f$ analogue au signal 33 représenté sur les figures 6 à 8 et décrit plus haut.

Le signal fournit par le spectre principal, traité par les premiers moyens électroniques 7 commande le modulateur 4 et assure le fonctionnement en boucle fermée du dispositif. En régime permanent, ( effet du paramètre mesuré compensé par une modulation de contre-réaction et gain de la chaîne de modulation asservi ) les valeurs $x_{1p},x_{2p},x_{3p},x_{4p}$ du signal $33_p$ sont égales. Les variations soit du gain de la chaîne de modulation, soit de la longueur d'onde moyenne $\lambda_{mp}$ ont comme nous l'avons vu des effets comparables sur ces signaux et se compensent par la boucle d'asservissement du gain.

Par contre la longueur d'onde moyenne $\lambda_{mf}$ du flux filtré, déterminé par le filtre 22, dont elle est la longueur d'onde centrale, est invariable. Une modification de la réponse de l'interféromètre, produite par l'une des boucles d'asservissement pour compenser un déplacement spectral de la source engendre, alors une modification du signal produit par le spectre filtré.

L'exploitation du signal sortant du système de traitement 216 permet donc l'obtention d'un signal fonction du décalage entre la longueur d'onde moyenne de la source et la réponse du filtre. Ce signal peut être utilisé à toute fin voulue et par exemple pour asservir le spectre de la source. Il commande alors la température de la source, la longueur d'onde de pompe dans le cas d'une source à fibre dopée terre rare, ou plus généralement tout paramètre, dépendant du type de la source utilisée, permettant de faire varier son spectre.

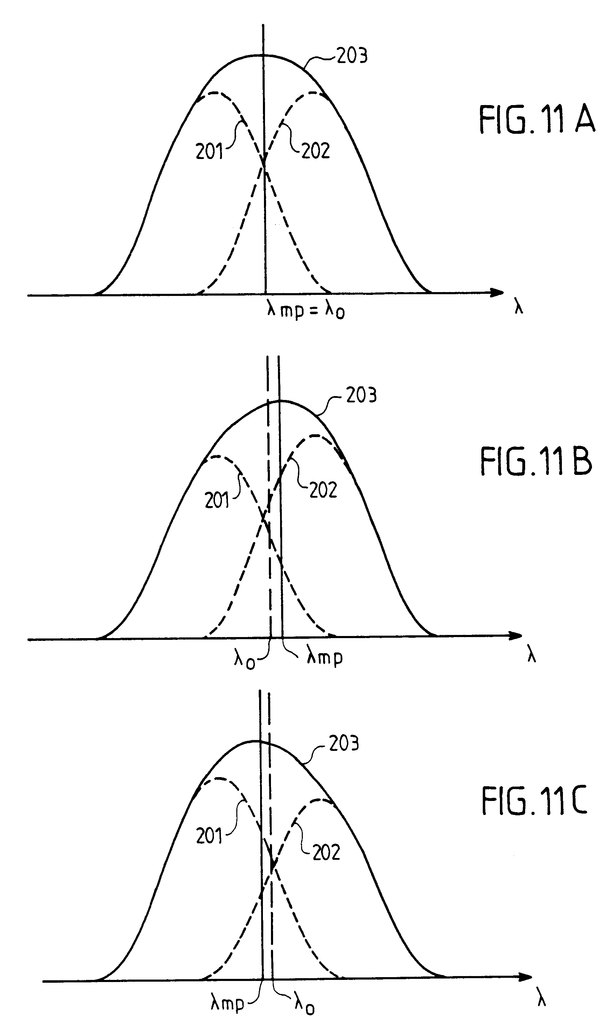

L'asservissement du spectre de la source 1 est obtenu aisément, dans le cas particulier où elle est constituée de deux sources élémentaires ayant chacune un spectre 201, 202, décalé l'un par rapport à l'autre (Figure 11) .Le spectre total 203 de la source 1 est la somme des spectres 201, 202 des sources élémentaires.

La modification de l'intensité relative des sources élémentaires permet de déplacer et donc de contrôler la longueur d'onde moyenne de la source.

La Figure 11A représente la répartition spectrale totale, lorsque les intensités de la source des sources élémentaires sont égales.

Sur la figure 11B l'intensité de la source élémentaire ayant le spectre 202 est supérieure, la longueur d'onde moyenne de la source est décelée vers les grandes longueurs d'onde.

La figure 11C représente la situation inverse

De nombreux dispositifs tels que des coupleurs à fibres ou des lames semi transparentes, permettent l'association des sources élémentaires pour produire la source 1.

Le signal obtenu ainsi peut être très précis. En effet un modulateur de phase 4 par effet électro-optique, tel que ceux utilisés dans l'optique intégrée sur niobate de lithium ou par effet élasto-optique lors de l'utilisation d'une fibre allongée par une céramique piézo électrique constitue un modulateur de chemin optique : son efficacité étant représentée par E, il produit, lorsqu'il est soumis à une différence de potentiel V, une différence de chemin optique $\delta L = E \times V$ indépendamment de la longueur d'onde ( au premier ordre ) Cela engendre une variation de la différence de phase $\delta \phi = 2\pi\delta L/\lambda = 2\pi EV/\lambda$. Le modulateur de phase 4 a donc une efficacité inversement proportionnelle à la longueur d'onde $\lambda$.

Le traitement du signal $33_p$, par les premiers moyens électroniques 7 à partir du signal reçu du premier détecteur 3, asservit donc l'efficacité de la chaîne de modulation de phase sur une valeur de référence de la différence de phase par exemple sur la valeur $\phi_0$ pour la longueur d'onde moyenne du spectre principal, c'est-à-dire que l'efficacité est, en fait, asservie sur une différence de chemin optique $\delta L_o$ telle que: $\phi_0 = 2\pi\delta L_o/\lambda_{mp}$. Ceci signifie que pour a = 2, c'est à dire $\phi_0 = 2\pi/3$, $\delta L_o$ est asservi à $\lambda_{mp}/3$.

Par contre, cet asservissement du chemin optique $\delta L_o$ conduit pour le spectre filtré, sur le signal $33_f$ à une modulation de la différence de phase $\phi'_o$ , $-\phi'_o$ ,$a\phi'_o$ , $-a\phi'_o$ avec $\phi'_o = 2\pi\delta L_o/\lambda_{mf}$ et donc $\phi'_o = (\lambda_{mp}/\lambda_{mf})\phi_o$. Quand $\lambda_{mp}$ est différent de $\lambda_{mf}$, alors $\phi'_o$ est différent de $\phi_o$, et le signal $33_f$ permet de mesurer l'écart entre $\phi_o$ et $\phi'_o$ et donc entre $\lambda_{mp}$ et $\lambda_{mf}$

La différence de longueur d'onde se traduit donc par une variation de différence de phase. Les différences de phase de $10^{-6}$ à $10^{-7}$ radian étant mesurées facilement, une variation relative de $10^{-6}$ à $10^{-7}$ de la longueur d'onde peut également être mesurée.

Jusqu'a présent un premier mode de réalisation a été décrit, dans lequel le signal de modulation prend périodiquement quatre états, dans un autre mode de réalisation préféré le signal de commande $V_m$ est déterminé et généré par le générateur de modulation 12 de telle sorte que la différence de phase $\delta\phi_m$ prenne périodiquement huit valeurs.:

$$\delta\phi_1 = (\phi_0 + d\phi_0) \qquad \delta\phi'_1 = (\phi_0 - d\phi_0)$$
$$\delta\phi_2 = -(\phi_0 + d\phi_0) \qquad \delta\phi'_2 = -(\phi_0 - d\phi_0)$$
$$\delta\phi_3 = a(\phi_0 + d\phi_0) \qquad \delta\phi'_3 = a(\phi_0 - d\phi_0)$$
$$\delta\phi_4 = -a(\phi_0 + d\phi_0) \qquad \delta\phi'_4 = -a(\phi_0 - d\phi_0)$$

Ces valeurs de la différence de phase produisent en réponse, pour le flux principal, d'une part et pour le flux filtré, d'autre part des valeurs $x_1$, $x'_1$, $x_2$, $x'_2$, $x_3$, $x'_3$, $x_4$, $x'_4$.(respectivement notés avec les indices p et f correspondants.)

Le spectre principal est exploité par le système de traitement 16 de la première unité de traitement 7 qui regroupent deux à deux les valeurs $x_{1p}$ a $x'_{4p}$ selon la loi

$$X_{1p} = (x_{1p} + x'_{1p})/2 , X_{2p} = (x_{2p} + x'_{2p})/2,$$
$$X_{3p} = (x_{3p} + x'_{3p})/2 , X_{4p} = (x_{4p} + x'_{4p})/2.$$

et réalise l'opération $(X_{1p} + X_{3p}) - (X_{2p} + X_{4p})$ ce qui permet d'asservir la différence de phase $\delta\phi_m$ sur sa valeur de référence moyenne entre $(\phi_0 + d\phi_0)$ et $(\phi_0 - d\phi_0)$ c'est à dire $\phi_o$.

La valeur du paramètre P peut alors être obtenue en réalisant l'opération $(X_{1p} + X_{4p}) - (X_{2p} + X_{3p})$.

La deuxième unité de traitement 216 du signal sortant du deuxième détecteur sélectionne les états $x_{1f}$, $x_{2f}$, $x_{3f}$, $x_{4f}$.

La modulation de phase sur les huit états indiqués plus haut crée une modulation de la différence de marche également sur huit états;

$$\delta L_o + dL_o \qquad \delta L_o - dL_o$$
$$-(\delta L_o + dL_o) \qquad -(\delta L_o - dL_o)$$
$$a(\delta L_o + dL_o) \qquad a(\delta L_o - dL_o)$$
$$-a(\delta L_o + dL_o) \qquad -a(\delta L_o - dL_o)$$

Une boucle supplémentaire de contre-réaction par laquelle les deuxièmes moyens 219 commandent le générateur de modulation 12 permet alors d'ajuster $d\phi_o$ pour que:

$(x_{1f} + x_{3f}) - (x_{2f} + x_{4f})$ soit asservi à zéro pour le signal produit par le spectre filtré, c'est à dire pour que la différence de marche $(\delta L_o + dL_o)$ génère, pour la longueur d'onde $\lambda_{mf}$, une différence de phase $\phi_o$ telle que:

$$\phi_o = 2\pi(\delta L_o + dL_o)/\lambda_{mf},$$

comme, par ailleurs $\delta L_o$ est asservie de façon que:

$$\phi_o = 2\pi\delta L_o/\lambda_{mp},$$

ceci conduit à.

$$(\delta L_o + dL_o)/\lambda_{mf} = \delta L_o/\lambda_{mp}$$

et donc

$$dL_o/\delta L_o = d\phi_0/\phi_0 = (\lambda_{mf} - \lambda_{mp})/\lambda_{mp}$$

Grâce aux différentes boucles d'asservissement $d\phi_0$ est mesurée très précisément et permet donc de retrouver l'écart $\delta\lambda$ entre la longueur d'onde moyenne $\lambda_{mp}$ du flux principal et la longueur d'onde moyenne $\lambda_{mf}$ du flux filtré, qui sert de référence, puisque :

$$(\lambda_{mf} - \lambda_{mp}) = \delta\lambda = \lambda_{mp}(d\phi_0/\phi_0).$$

## Revendications

1. Dispositif de mesure à fibre optique dans lequel la variation d'un paramètre mesuré engendre une différence de phase entre deux ondes comportant

 - une source lumineuse à spectre large (1), ayant un spectre dont la longueur d'onde moyenne est $\lambda_m$,
 - un interféromètre en anneau de Sagnac de préférence monomode, dans lequel se propage deux ondes contrapropagatives, le temps de propagation des ondes entre leur séparation et leur recombinaison à la longueur d'onde $\lambda_m$ étant $\tau$,
 - un premier détecteur (3) recevant un flux lumineux sortant de l'interféromètre (2) et le convertissant en un signal électrique représentant la différence de phase totale $\delta\phi_t$ entre les ondes contra-propagatives,
 - un modulateur de phase (4) générant une différence de phase $\delta\phi_m + \delta\phi_{cr}$, comportant une composante de mise au biais $\delta\phi_m$ et une composante $\delta\phi_{cr}$ de contre-réaction
 - des premiers moyens électroniques (7) recevant un signal électrique du premier détecteur (3), fournissant un signal fonction du paramètre mesuré,
 - ledit signal fonction du paramètre mesuré produisant la composante $\phi_{cr}$ de commande du modulateur de phase (4) déterminée de telle sorte que la différence de phase $\delta\phi_{cr}$ qu'elle produit entre les ondes contra-propagatives compense la différence de phase $\delta\phi_p$ introduite par le paramètre mesuré,
   caractérisé en ce que
 - Il comporte un filtre spectral étroit et stable (22) placé entre l'interféromètre (2) et le premier détecteur (3) et séparant le flux incident en un flux principal à spectre large, adressé sur le premier détecteur (3) et un flux filtré,
 - les premiers moyens électroniques (7) comportent des premiers moyens (19) de mesure et d'asservissement du gain de la chaîne de modulation à partir d'une opération réalisée par des premiers moyens de traitement (16) sur le signal provenant du premier détecteur (3),
 - il comporte un deuxième détecteur (23), recevant le flux filtré, la réponse du deuxième détecteur (23) étant traitée des deuxièmes moyens électroniques (27) comportant des deuxièmes moyens (219) réalisant, sur le signal provenant du deuxième détecteur (23), par des deuxièmes moyens de traitement (216) une mesure, du gain de la chaîne de modulation identique à celle réalisée par les premiers moyens de traitement (16) sur le signal provenant du premier détecteur (3), fournissant un signal fonction de l'écart entre la longueur d'onde moyenne $\lambda_{mf}$ du flux filtré et la longueur d'onde moyenne $\lambda_{mp}$ du flux principal.

2. Dispositif selon la revendication 1, caractérisé en ce que
 - les moyens électroniques (7) et (27) comportent chacun un convertisseur analogique - numérique numérisant le signal électrique reçu respectivement du premier détecteur (3) et du deuxième détecteur (23)

- le signal de commande $\phi_m$ étant déterminé de telle sorte que la différence de phase $\delta\phi_m$ qu'il produit entre les ondes contra-propagatives prenne periodiquement un nombre de valeurs multiple de quatre, reliées quatre à quatre par la relation :

$$\delta\phi_1 = \phi_0 \qquad \delta\phi_2 = a\phi_0$$
$$\delta\phi_3 = -\phi_0 \qquad \delta\phi_4 = -a\phi_0$$

où a est une constante positive fixée et $\phi_0$ est une différence de phase de référence dépendante de a,

- que les premiers moyens électroniques (7) produisent un signal fonction du paramètre mesuré en exploitant les quatre valeurs $x_{1p}$ , $x_{2p}$ , $x_{3p}$ , $x_{4p}$ fournies en réponse à quatre valeurs du signal de commande $\phi_m$ selon la formule $(x_{1p} + x_{4p}) - (x_{2p} + x_{3p})$.

3. Dispositif selon l'une quelconque des revendications 1 et 2, caractérisé en ce que le signal de commande $\phi_m$ est déterminé de telle sorte que la différence de phase $\delta\phi_m$ prenne périodiquement quatre valeurs.

4. Dispositif selon la revendication 3 , caractérisé en ce

que les premiers moyens électroniques (7) maintiennent constant le gain de la chaîne de commande de la modulation en produisant un signal fonction dudit gain en exploitant les quatre valeurs $x_{1p}$ , $x_{2p}$ , $x_{3p}$ , $x_{4p}$ fournies en réponse à quatre valeurs du signal de commande $\phi_m$ selon la formule $(x_{1p} + x_{3p}) - (x_{2p} + x_{4p})$ , ledit signal agissant sur la chaîne de modulation de façon à maintenir le gain constant en satisfaisant la condition: $\cos\phi_0 = \cos a\phi_0$.

et que les deuxièmes moyens électroniques (27) produisent un signal fonction de l'écart entre la longueur d'onde moyenne $\lambda_{mf}$ du flux filtré et la longueur d'onde moyenne $\lambda_{mp}$ du flux principal en exploitant les quatre valeurs $x_{1f}$ , $x_{2f}$ , $x_{3f}$ , $x_{4f}$ fournies en réponse à quatre valeurs du signal de commande $\phi_m$ selon la formule $(x_{1f} + x_{3f}) - (x_{2f} + x_{4f})$.

5. Dispositif selon la revendication 2, caractérisé en ce que le signal de commande $\phi_m$ est déterminé de telle sorte que la différence de phase $\delta\phi_m$ prenne périodiquement huit valeurs

:

$$\delta\phi_1 = (\phi_0 + d\phi_0) \qquad d\phi'_1 = (\phi_0 - d\phi_0)$$
$$\delta\phi_2 = -(\phi_0 + d\phi_0) \qquad d\phi'_2 = -(\phi_0 - d\phi_0)$$
$$\delta\phi_3 = a(\phi_0 + d\phi_0) \qquad d\phi'_3 = a(\phi_0 - d\phi_0)$$
$$\delta\phi_4 = -a(\phi_0 + d\phi_0) \qquad d\phi'_4 = -a(\phi_0 - d\phi_0)$$

Ces valeurs de la différence de phase produisant en réponse, pour le flux principal, des valeurs $x_{1p}$, $x'_{1p}$, $x_{2p}$, $x'_{2p}$, $x_{3p}$, $x'_{3p}$, $x_{4p}$, $x'_{4p}$, d'une part et pour le flux secondaire, des valeurs $x_{1f}$, $x'_{1f}$, $x_{2f}$, $x'_{2f}$, $x_{3f}$, $x'_{3f}$, $x_{4f}$, $x'_{4f}$, d'autre part ,la première unité de traitement regroupant deux à deux les valeurs $x_{1p}$ à $x'_{4p}$ selon la loi

$$X_{1p} = (x_{1p} + x'_{1p})/2 , X_{2p} = (x_{2p} + x'_{2p})/2,$$
$$X_{3p} = (x_{3p} + x'_{3p})/2 , X_{4p} = (x_{4p} + x'_{4p})/2,$$

et réalise l'opération
$(X_{1p} + X_{3p}) - (X_{2p} + X_{4p})$ et utilise le signal ainsi produit pour asservir le gain de la chaîne de modulation

et que la deuxième unité de traitement du signal sortant du deuxiéme détecteur sélectionne les états $x_{1f}$ , $x_{2f}$, $x_{3f}$ , $x_{4f}$ .

et réalise l'opération
$( x_{1f} + x_{3f}) - (x_{2f} + x_{4f})$ et utilise le signal ainsi produit pour contrôler la valeur de $d\phi_0$ et générer une mesure de l'écart entre la longueur d'onde moyenne $\lambda_{mf}$ du flux filtré et la longueur d'onde moyenne $\lambda_{mp}$ du flux principal.

6. Dispositif de mesure à fibre optique selon l'une quelconque des revendications 1 à 5, caractérisé en ce que le signal fonction du spectre de la source lumineuse (1) fourni par les deuxièmes moyens de traitement électroniques(27) commande ladite source lumineuse (1) de manière à asservir la longueur d'onde moyenne $\lambda_{mp}$ du flux principal sur la longueur d'onde moyenne $\lambda_{mf}$ du flux filtré .

7. Dispositif selon l'une quelconque des revendications 2 à 6, caractérisé en ce que

$$a = 3$$

8. Dispositif selon l'une quelconque des revendications 2 à 6, caractérisé en ce que

$$a = 2$$

9. Dispositif selon l'une quelconque des revendications 1 à 8, caractérisé en ce que le filtre spectral (22) est un filtre de Fabry - Perot stable.

10. Dispositif selon l'une quelconque des revendications 1 à 9, caractérisé en ce que la longueur d'onde moyenne $\lambda_m$ du spectre de la source est 1,3$\mu$m.

11. Dispositif selon l'une quelconque des revendications 1 à 10, caractérisé en ce que la source lumineuse (1) comporte deux sources élémentaires associées, de telle sorte que la variation de l'intensité relative des sources élémentaires permette de faire varier sa longueur d'onde moyenne.

12. Gyromètre caractérisé en ce qu'il est conforme au dispositif de mesure de l'une quelconque des revendications 1 à 11, le paramètre mesuré étant la vitesse de rotation de l'interféromètre.

13. Centrale de navigation ou de stabilisation inertielle comportant au moins un gyromètre selon la revendication 12.

**Claims**

1. Optical fiber measuring device in which the variation in a measured parameter causes a phase difference between two waves comprising:
   - A wide spectrum light source (1), with a spectrum of mean wavelength $\lambda_m$,
   - A SAGNAC ring interferometer, preferably monomode, in which two counter-propagative waves travel, the propagation time of the waves between separation and recombination at wavelength $\lambda_m$ being $\tau$,
   - A first detector (3) which receives a light flux from the interferometer (2) and converts it into an electrical signal representing the total phase difference $\delta\phi_t$ between the counter-propagative waves,
   - A phase modulator (4) generating a phase difference $\delta\phi_m + \delta\phi_{CR}$, made up of a biased component, $\delta\phi_m$ and a counter-reaction component $\delta\phi_{CR}$,
   - First electronic means (7) which receive an electrical signal from the first detector (3) and supplies a signal that is a function of the measured parameter,
   - The said signal, a function of the measured parameter, producing the phase modulator command component $\phi_{CR}$ which is determined in such a way that the phase difference $\delta\phi_{CR}$ that it produces between the counter-propagative waves compensates for the phase differences $\delta\phi_p$ created by the measured parameter,
   characterized in that:
   - it comprises a narrow, stable spectral filter (22), located between the interferometer (2) and the first detector (3), which splits the incident flux into a main flux with a wide spectrum sent to the first detector (3), and a filtered flux,
   - the first electronic means (7) comprise first means (19) for measuring and slaving the gain of the modulation chain starting from an operation performed by the first processing means (16) on the signal received from the first detector (3),
   - it comprises a second detector (23) which receives the filtered flux, the response of this second detector (23) being processed by second electronic means (27) comprising second means (219) which effect on the signal received from the second detector (23), using second processing means (216), a measurement of the gain of the modulation chain, the said gain measurement being identical to that performed by the first processing means (16) on the signal received from the first detector (3), supplying a signal that is a function of the difference between the mean wavelength $\lambda_{mf}$ of the filtered flux and the mean wavelength $\lambda_{mp}$ of the main flux.

2. Device according to Claim 1, characterized in that:
   - the electronic means (7) and (27) each comprise an analog-to-digital converter which digitizes the electrical signal received respectively from the first detector (3) and from the second detector (23),
   - the command signal $\phi_m$ being determined in such a way that the phase difference $\delta\phi_m$ which it produces between the counter-propagative waves periodically takes a number of values of a multiple of four, linked in four's by the equations:

$$\delta\phi_1 = \phi_0 \qquad \delta\phi_2 = a\phi_0$$
$$\delta\phi_3 = -\phi_0 \qquad \delta\phi_4 = -a\phi_0$$

   where a is a positive fixed constant and $\phi_0$ a reference phase difference that is dependent on a,

- the first electronic means (7) produce a signal that is a function of the measured parameter by using the four values $x_{1p}$, $x_{2p}$, $x_{3p}$, $x_{4p}$ supplied in response to four values of the command signal $\phi_m$ according to the formula $(x_{1p} + x_{4p}) - (x_{2p} + x_{3p})$.

3. Device according to any one of Claims 1 and 2 characterized in that the command signal $\phi_m$ is determined in such a way that the phase difference $\delta\phi_m$ periodically takes four values.

4. Device according to Claim 3, characterized in that:

the first electronic means (7) maintain the gain of the modulation command chain constant by producing a signal that is a function of the said gain by using the four values $x_{1p}$, $x_{2p}$, $x_{3p}$, $x_{4p}$ supplied in response to four values of the command signal $\phi_m$ according to the formula $(x_{1p} + x_{3p}) - (x_{2p} + x_{4p})$, the said signal acting on the modulation chain in such a way so as to maintain the gain constant by satisfying the condition: $\cos\phi_0 = \cos a\phi_0$,

and the second electronic means (27) produce a signal that is a function of the difference between the mean wavelength $\lambda_{mf}$ of the filtered flux and the mean wavelength $\lambda_{mp}$ of the main flux using the four values $x_{1f}$, $x_{2f}$, $x_{3f}$, $x_{4f}$ supplied in response to four values of the command signal $\phi_m$ according to the formula $(x_{1f} + x_{3f}) - (x_{2f} + x_{4f})$.

5. Device according to Claim 2, characterized in that the command signal $\phi_m$ is determined in such a way that the phase difference $\delta\phi_m$ periodically takes eight values:

$$\delta\phi_1 = (\phi_0 + d\phi_0) \qquad d\phi'_1 = (\phi_0 - d\phi_0)$$
$$\delta\phi_2 = -(\phi_0 + d\phi_0) \qquad d\phi'_2 = -(\phi_0 - d\phi_0)$$
$$\delta\phi_3 = a(\phi_0 + d\phi_0) \qquad d\phi'_3 = a(\phi_0 - d\phi_0)$$
$$\delta\phi_4 = -a(\phi_0 + d\phi_0) \qquad d\phi'_4 = -a(\phi_0 - d\phi_0)$$

these values of the phase difference producing in response, for the main flux, the values $x_{1p}$, $x'_{1p}$, $x_{2p}$, $x'_{2p}$, $x_{3p}$, $x'_{3p}$, $x_{4p}$, $x'_{4p}$, on one hand and for the secondary flux, the values $x_{1f}$, $x'_{1f}$, $x_{2f}$, $x'_{2f}$, $x_{3f}$, $x'_{3f}$, $x_{4f}$, $x'_{4f}$, on the other hand, the first processing unit regrouping in two's the values $x_{1p}$ to $x'_{4p}$ according to the law:

$$x_{1p} = (x_{1p} + x'_{1p})/2, \, x_{2p} = (x_{2p} + x'_{2p})/2$$
$$x_{3p} = (x_{3p} + x'_{3p})/2, \, x_{4p} = (x_{4p} + x'_{4p})/2$$

to perform the operation $(x_{1p} + x_{3p}) - (x_{2p} + x_{4p})$ and then using

the signal thus produced to slave the gain of the modulation chain, and the second processing unit processing the signal sent from the second detector selects the states $x_{1f}$, $x_{2f}$, $x_{3f}$, $x_{4f}$,

and performs the operation $(x_{1f} + x_{3f}) - (x_{2f} + x_{4f})$, using the signal thus produced to control the value of $d\phi_0$ and to generate a measurement of the difference between the mean wavelength $\lambda_{mf}$ of the filtered flux and the mean wavelength $\lambda_{mp}$ of the main flux.

6. Optical fiber measurement device according to any one of Claims 1 to 5, characterized in that the signal that is a function of the spectrum of the light source (1) supplied by the second electronic processing means (27) command the said light source (1) in such a way so as to slave the mean wavelength $\lambda_{mp}$ of the main flux against the mean wavelength $\lambda_{mf}$ of the filtered flux.

7. Device according to any one of Claims 2 to 6, characterized in that

$$a = 3$$

8. Device according to any one of Claims 2 to 6, characterized in that

$$a = 2$$

9. Device according to any one of claims 1 to 8, characterized in that the spectral filter (22) is a stable Fabry-Perot filter.

10. Device according to any one of claims 1 to 9, characterized in that the mean wavelength $\lambda_m$ of the spectrum of the source is 1.3 $\mu$m.

11. Device according to any one of claims 1 to 10, characterized in that the light source (1) comprises two associated elementary sources, in such a way that the variation in the relative intensity of the elementary sources is used to vary its mean wavelength.

12. Gyrometer characterized in that it conforms with the measuring device according to any one of claims 1 to 11, the measured parameter being the rotational speed of the interferometer.

13. Inertial navigation or stabilization processing central unit comprising at least one gyrometer according to claim 12.

## Patentansprüche

1.  Faseroptik-Meßvorrichtung, in der die Variation eines gemessenen Parameters eine Phasendifferenz zwischen zwei Wellen erzeugt, mit
    - einer Breitspektrum-Lichtquelle (1) mit einem Spektrum, dessen mittlere Wellenlänge $\lambda_m$ ist,
    - einem vorzugsweise monomodalen SAGNAC-Ringinterferometer, in dem sich zwei gegenläufig ausbreitende Wellen ausbreiten, wobei die Ausbreitungszeit der Wellen zwischen ihrer Trennung und ihrer Wiedervereinigung bei der Wellenlänge $\lambda_m$ $\tau$ beträgt,
    - einem ersten Detektor (3), der den aus dem Interferometer (2) austretenden Lichtfluß empfängt und ihn in ein elektrisches Signal umsetzt, das die Gesamt-Phasendifferenz $\delta\Phi_t$ zwischen den sich gegenläufig ausbreitenden Wellen repräsentiert,
    - einem Phasenmodulator (4), der eine Phasendifferenz $\delta\Phi_m$ + $\delta\Phi_{cr}$ mit einer Verzerrungskomponente $\delta\Phi_m$ und eine Rückkopplungs-Komponente $\delta\Phi_{cr}$ erzeugt,
    - ersten elektronische Mitteln (7), die ein elektrisches Signal vom ersten Detektor (3) empfangen, wodurch ein Signal als Funktion des gemessenen Parameters erzeugt wird,
    - wobei das als Funktion des gemessenen Parameters erzeugte Signal die Steuerungskomponente $\Phi_{cr}$ des Phasenmodulators (4) erzeugt, die so bestimmt wird, daß die Phasendifferenz $\delta\Phi_{cr}$, die sie zwischen den sich gegenläufig ausbreitenden Wellen erzeugt, die durch den gemessenen Parameter eingeführte Phasendifferenz $\delta\Phi_p$ kompensiert,
    dadurch gekennzeichnet, daß
    - sie ein enges und stabiles Spektralfilter (22) umfaßt, das zwischen dem Interferometer (2) und dem ersten Detektor (3) angeordnet ist und den auftreffenden Fluß in einen auf den ersten Detektor (3) gerichteten Hauptfluß mit breitem Spektrum und in einen gefilterten Fluß trennt,
    - die ersten elektronischen Mittel (7) erste Mittel (19) zum Messen und zum Regeln des Verstärkungsgrades der Modulationskette nach einer Operation, die durch die ersten Behandlungsmittel (16) mit dem aus dem ersten Detektor (3) stammenden Signal durchgeführt wird, aufweisen,
    - sie einen zweiten Detektor (23) umfaßt, der den gefilterten Fluß empfängt, wobei die Antwort des zweiten Detektors (23) durch zweite elektronische Mittel (27) behandelt wird, die zweite Mittel (219) aufweisen, mit denen aus dem von dem zweiten Detektor (23) stammenden Signal durch zweite Behandlungsmittel (216) ein Meßwert erzeugt wird, wobei der Verstärkungsgrad der Modulationskette mit dem identisch wird, der mit den ersten Mitteln zur Behandlung (16) mit dem aus dem ersten Detektor (3) stammenden Signal erzeugt wird, wodurch ein Signal erzeugt wird, das die Funktion der Abweichung zwischen der mittleren Wellenlänge $\lambda_{mf}$ des gefilterten Flusses und der mittleren Wellenlänge $\lambda_{mp}$ des Hauptflusses ist.

2.  Vorrichtung nach Anspruch 1, dadurch gekennzeichnet, daß
    - die elektronischen Mittel (7) und (27) jeweils einen Analog-Digital-Wandler umfassen, der das vom ersten Detektor (3) bzw. vom zweiten Detektor (23) empfangene elektrische Signal digitalisiert,
    - das Steuerungssignal $\Phi_m$ so bestimmt wird, daß die Phasendifferenz $\delta\Phi_m$, die es zwischen den sich gegenläufig ausbreitenden Wellen erzeugt, periodisch eine Anzahl von Werten annimmt, die ein Vielfaches von vier sind und in einer Vier-zu-vier-Zuordnung gemäß der Relation

    $$\delta\Phi_1 = \Phi_0 \qquad \delta\Phi_2 = a\Phi_0$$
    $$\delta\Phi_3 = \Phi_0 \qquad \delta\Phi_4 = -a\Phi_0$$

    zueinander stehen, wobei a eine feste positive Konstante ist und $\Phi_0$ eine von a abhängige Referenz-Phasendifferenz ist, die ersten elektronischen Mittel (7) ein Signal erzeugen, das eine Funktion des gemessenen Parameters ist, indem die vier Werte $x_{1p}$, $x_{2p}$, $x_{3p}$, $x_{4p}$, welche als Reaktion auf die vier Werte des Steuerungssignals $\Phi_m$ geliefert werden, gemäß der Formel $(x_{1p} + x_{4p}) - (x_{2p} - x_{3p})$ ausgewertet werden.

3.  Vorrichtung nach einer der Ansprüche 1 und 2, dadurch gekennzeichnet, daß das Steuerungssignal $\Phi_m$ so bestimmt wird, daß die Phasendifferenz $\delta\Phi_m$ periodisch vier Werte annimmt.

4.  Vorrichtung nach Anspruch 3, dadurch gekennzeichnet, daß die ersten elektronischen Mittel (7) den Verstärkungsgrad der Modulations-Steuerungskette konstant halten, indem sie ein Signal als Funktion des Verstärkungsgrades erzeugen, und zwar durch Auswerten der vier als Reaktion auf vier Werte des Steuerungssignals $\Phi_m$ gelieferten Werte $x_{1p}$, $x_{2p}$, $x_{3p}$, $x_{4p}$ gemäß der Formel $(x_{1p} + x_{3p}) - (x_{2p} + x_{4p})$, wobei das Signal auf die Weise auf die Modulationskette derart einwirkt, daß der Verstärkungsfaktor unter Erfüllung der Bedingung $\cos\Phi_0 = \cos a\Phi_0$ konstant gehalten wird, und daß die zweiten elektronischen Mittel (27) ein Signal als Funktion der Abweichung zwischen der mittleren Wellenlänge $\lambda_{mf}$ des gefilterten Flusses und der mittleren Wellenlänge $\lambda_{mp}$ des Hauptflusses erzeugen, indem die vier Werte $x_{1f}$, $x_{2f}$, $x_{3f}$, $x_{4f}$, die als Reaktion auf die vier Werte des Steuerungssignals $\Phi_m$ gemäß der Formel $(x_{1f} + x_{3f}) - (x_{2f} + x_{4f})$ geliefert werden, ausgewertet werden.

5.  Vorrichtung nach Anspruch 2, dadurch gekennzeichnet, daß das Steuerungssignal $\Phi_m$ derart bestimmt wird, daß der Phasenunterschied $\delta\Phi_m$ periodisch acht Werte annimmt:

$$\delta\Phi_1 = (\Phi_0 + d\,\Phi_0) \qquad d\Phi'_1 = (\Phi_0 - d\Phi_0)$$
$$\delta\Phi_2 = -(\Phi_0 + d\,\Phi_0) \qquad d\Phi'_2 = -(\Phi_0 - d\Phi_0)$$
$$\delta\Phi_3 = a(\Phi_0 + d\,\Phi_0) \qquad d\Phi'_3 = a(\Phi_0 - d\Phi_0)$$
$$\delta\Phi_4 = -a(\Phi_0 + d\,\Phi_0) \qquad d\Phi'_4 = -a(\Phi_0 - d\Phi_0)$$

wobei diese Werte für die Phasendifferenz als Reaktion einerseits für den Hauptfluß die Werte $x_{1p}$, $x'_{1p}$, $x_{2p}$, $x'_{2p}$, $x_{3p}$, $x'_{3p}$, $x_{4p}$, $x'_{4p}$ und andererseits für den Sekundärfluß die Werte $x_{1f}$, $x'_{1f}$, $x_{2f}$, $x'_{2f}$, $x_{3f}$, $x'_{3f}$, $x_{4f}$, $x'_{4f}$ erzeugen, wobei die erste Behandlungseinheit die Werte $x_{1p}$ bis $x_{4p}$ nach dem Gesetz

$$X_{1p} = (x_{1p} + x'_{1p})/2, \quad X_{2p} = (x_{2p} + x'_{2p})/2,$$
$$X_{3p} = (x_{3p} + x'_{3p})/2, \quad X_{4p} = (x_{4p} + x'_{4p})/2,$$

paarweise zusammenfaßt und die Operation

$$(X_{1p} + X_{3p}) - (X_{2p} + X_{4p})$$

ausführt und das so erzeugte Signal zum Triggern des Verstärkungsgrades der Modulationskette verwendet, und daß die zweite Behandlungseinheit des Signals, das den zweiten Detektor verläßt, die Zustände $x_{f1}$, $x_{f2}$, $x_{f3}$, $x_{f4}$ aussteuert und die Operation

$$(X_{1f} + X_{3f}) - (X_{2f} + X_{4f})$$

erfüllt und das so erzeugte Signal zum Steuern des Wertes von $d\Phi_0$ verwendet und zwischen einer mittleren Wellenlänge $\lambda_{mf}$ des gefilterten Flusses und der mittleren Wellenlänge $\lambda_{mp}$ des Hauptflusses einen Abweichungsmeßwert erzeugt.

6.  Faseroptik-Meßvorrichtung nach einem der Ansprüche 1 bis 5, dadurch gekennzeichnet, daß das als Funktion des Spektrums der Lichtquelle (1) vorliegende und durch die zweiten Mittel zur elektronischen Behandlung (27) erzeugte Signal die Lichtquelle (1) derart steuert, daß die mittlere Wellenlänge $\lambda_{mp}$ des Hauptflusses über die mittlere Wellenlänge $\lambda_{mf}$ des gefilterten Flusses getriggert wird.

7.  Vorrichtung nach einem der Ansprüche 2 bis 6, dadurch gekennzeichnet, daß

$$a = 3.$$

8.  Vorrichtung nach einem der Ansprüche 2 bis 6, dadurch gekennzeichnet, daß

$$a = 2.$$

9.  Vorrichtung nach einem der Ansprüche 1 bis 8, dadurch gekennzeichnet, daß das Spektralfilter (22) ein stabiles Filter nach Fabry-Perot ist.

10. Vorrichtung nach einem der Ansprüche 1 bis 9, dadurch gekennzeichnet, daß die mittlere Wellenlänge $\lambda_m$ des Spektrums der Quelle 1,3 $\mu$m beträgt.

11. Vorrichtung nach einem der Ansprüche 1 bis 10, dadurch gekennzeichnet, daß die Lichtquelle (1) zwei verbundene Elementarquellen aufweist, und zwar derart, daß die Veränderung der relativen Intensität der Elementarquellen die Veränderung ihrer mittleren Wellenlänge ermöglicht.

12. Gyrometer, dadurch gekennzeichnet, daß es mit der Meßvorrichtung nach einer der Ansprüche 1 bis 11 konform ist, wobei der gemessene Parameter die Umdrehungsgeschwindigkeit des Interferometers ist.

13. Navigations- oder Trägheitsstabilisierungs-Steuerung mit mindestens einem Gyrometer nach Anspruch 12.

$$P \uparrow$$

$$(\lambda_{mf} - \lambda_{mp})$$

FIG.1

$$P \uparrow$$

$$(\lambda_{mf} - \lambda_{mp})$$

FIG.4

FIG. 2

FIG. 3

FIG.5

FIG.6

EP 0 522 967 B1

FIG.7

FIG.8

FIG.9

EP 0 522 967 B1

FIG.10

EP 0 522 967 B1

FIG.11 A

$\lambda mp = \lambda_0$

FIG.11 B

$\lambda_0 \quad \lambda mp$

FIG.11 C

$\lambda mp \quad \lambda_0$